# EUROPÄISCHE PATENTANMELDUNG

(11) **EP 3 599 053 A1**
(43) Veröffentlichungstag der Anmeldung: **29.01.2020**
(21) Anmeldenummer: 19184305.1
(22) Anmeldetag: 04.07.2019
(51) Int. Cl.: B24D 9/08, B65G 59/02, B25J 15/00, B65G 59/00, B24D 18/00

(54) **VORRICHTUNG UND VERFAHREN ZUR VEREINZELUNG VON PLATTENFÖRMIGEN GEGENSTÄNDEN**

(30) Priorität: 27.07.2018 DE 102018118189
(71) Anmelder: M-Tech Systems GmbH, 9020 Klagenfurt (AT)
(72) Erfinder: FRÖSCHL, Hermann, 9163 Unterbergen (AT)
(74) Vertreter: Riebling, Peter

(57) **Zusammenfassung**

Vorrichtung zum Vereinzeln und Bewegen von plattenförmigen Gegenständen (2, 3, 4), insbesondere von Schleifscheiben (1) von einem Stapel (5), wobei die Vorrichtung mindestens einen vertikal bewegbaren Greifer (7, 25) aufweist und aufgrund einer Relativbewegung zwischen dem Greifer (7, 25) und dem Stapel (5) mindestens einem plattenförmiger Gegenstand von dem Stapel (5) lösbar und abhebbar ist, wobei am freien unteren Ende des Greifers (7, 25) ein Kopfteil (8) mit mindestens einer Auflagefläche (10, 10a, 10b) angeordnet ist, die in eine Ausnehmung (6) des plattenförmigen Gegenstandes einfahrbar ist und durch die Relativbewegung die Auflagefläche des Greifers (7, 25) mindestens den plattenförmigen Gegenstand untergreift und vom Stapel (5) abhebt.

## Beschreibung

Die Erfindung betrifft eine Vorrichtung und ein Verfahren zur Vereinzelung und zur Bewegung von plattenförmigen Gegenständen, insbesondere von Schleifscheiben, oder dergleichen nach den Oberbegriffen der Patentansprüche 1, 5, 9 und 10.

Plattenförmige Gegenstände sind Gegenstände, welche flach, scheibenförmig oder scheibenartig ausgebildet sind. Beispiele für plattenförmige Gegenstände sind z.B. eine Schleifscheibe, ein scheibenartiger Datenträger (CD, DVD, Schallplatte) oder eine Blechscheibe.

Eine Schleifscheibe ist ein rotationssymmetrischer Körper mit einer mittigen, kreisrunden Ausnehmung (Mittelloch). Die Schleifscheibe wird in eine Schleifmaschine eingespannt, um Metall, Holz und Glas zu schleifen. Andere Bezeichnungen für Schleifscheiben sind Trennscheibe oder Schleifer. Die Schleifscheibe besteht aus einem harten Schleifmaterial (Korund, Siliziumcarbid, CBN oder Diamant), einem Bindemittel (Glas, Harz und Kunstharz oder Keramik), sowie Poren. Die Poren zwischen den Schleifkörnern und dem Bindemittel wirken hierbei als Kühlschmiermittelkammern, die auch den Abtransport der Späne beim Schleifen fördern.

Im Rahmen des Herstellungsverfahrens einer Schleifscheibe wird diese beidseitig von Trennschichten aus z.B. teflonbeschichtetem Glasfasergewebe umgeben. Die beiden Trennschichten und die dazwischen befindliche Schleifscheibe werden als Sandwich bezeichnet. Mehrere Sandwiches werden auf einem Stapel übereinander angeordnet und sind teilweise durch Zwischenplatten aus z.B. Aluminium getrennt. Der gesamte Stapel wird in einem Brennofen mit Wärme behandelt. Nach Abschluss der Wärmebehandlung wird der Stapel aus dem Brennofen genommen.

Die übereinander angeordneten Zwischenplatten und Sandwiches müssen nun vereinzelt und anschließend getrennt voneinander abgelegt werden. Um zwei übereinander befindliche Sandwiches voneinander zu trennen, ist es erforderlich die Haftung zwischen den beiden Trennschichten (z.B. teflonbeschichtetes Glasfasergewebe) oder die Haftung zwischen einer Trennschicht und einer Zwischenplatte zu überwinden.
Der Vereinzelungsprozess der Schleifscheiben ist jedoch mit zahlreichen Problemen verbunden, welche beispielhaft an dieser Stelle aufgezählt werden:
- Der Stapel aus den Sandwiches und den Zwischenplatten weist ein relativ hohes Eigengewicht auf.
- Durch die vorherige Wärmebehandlung ist der Stapel sehr heiß.
- Es liegt eine hohe Staubentwicklung vor.
- Bisher musste der Stapel von Hand aufgelöst werden, was mit schwerer körperlicher Arbeit und einer damit verbundenen mögliche Gesundheitsschädigung verbunden war.
- Teilweise backen die Sandwichpakete zusammen, wodurch ein zusätzlicher Arbeitsaufwand notwendig ist.

Mit der Druckschrift DE 100 55 197 A1 wird eine Vorrichtung zum Auflösen eines Stapels mit abwechselnd übereinander angeordneten Brennplatten und Fertigerzeugnisse offenbart. Die Brennplatten und Fertigerzeugnisse weisen eine mittige Ausnehmung auf, in welche ein Spreizdorn einfährt. Mit Hilfe von einem seitlichen Anschlag und einem radial bewegbaren Stößel wird nun die zweitoberste Lage der Brennplatten und Fertigerzeugnisse gehalten. Durch ein Aufspreizen des Dorns kann nun die oberste Lage von dem Stapel abgehoben werden.

Mit der Druckschrift DE 200 14 892 U1 wird eine Vorrichtung zur Vereinzelung von Platten aus einem Plattenstapel beschrieben. Hierfür wird mit Hilfe eines Schiebers eine Platte des Stapels verschoben, während die restlichen Platten von einem seitlichen Anschlag gehalten werden. Die vereinzelte Platte wird dann seitlich von einer zusätzlichen Vorrichtung von dem Stapel wegbewegt.

Mit der EP 1 258 440 A1 wird eine Vorrichtung zum Ausrichten und Separieren von einem Werkstückstapel bereitgestellter plattenförmiger Werkstücke offenbart. Der Werkstückstapel befindet sich auf einer Hubeinrichtung, welche den gesamten Stapel stets auf ein bestimmtes Niveau anhebt, wobei mehrere Saugelemente das oberste plattenförmige Werkstück von dem Stapel anheben und seitlich verschieben.

Aus dem Stand der Technik ist es somit bereits bekannt, dass durch eine Relativbewegung einzelne Platten gegenüber einem (Platten-)Stapel verschoben werden.

Aufgabe der vorliegenden Erfindung ist nun eine Vorrichtung bereitzustellen, welche plattenförmige Gegenstände, insbesondere Schleifscheiben schnell, sicher, kostengünstig und ohne hohe mechanische Beanspruchung von einem Stapel vereinzelt.

Zur Lösung der gestellten Aufgabe ist die Erfindung durch die technische Lehre der Ansprüche 1, 5, 9 und 10 gekennzeichnet.

Wesentliches Merkmal der Erfindung ist, dass am freien unteren Ende des Greifers ein Kopfteil mit mindestens einer Auflagefläche angeordnet ist, die in eine Ausnehmung des plattenförmigen Gegenstandes einfahrbar ist und durch die Relativbewegung die Auflagefläche des Greifers mindestens den plattenförmigen Gegenstand untergreift und vom Stapel abhebt.

Die Relativbewegung erfolgt entweder durch eine Verschiebevorrichtung, welche mindestens einen plattenförmigen Gegenstand gegenüber dem Stapel verschiebt oder durch Klemmbacken, welche sich am Greifer befinden und den plattenförmigen Gegenstand festklemmen.

Durch die Relativbewegung bestehen folgende Möglichkeiten zur Vereinzelung der von plattenförmigen Gegenständen von einem Stapel:
1) Die plattenförmigen Gegenstände werden gegeneinander verschoben;
2) Die plattenförmigen Gegenstände werden voneinander abgehoben;
3) Die plattenförmigen Gegenstände werden zueinander verdreht und abgehoben;

Bei einer ersten bevorzugten Ausführungsform weist die Vorrichtung einen vertikal bewegbaren Greifer auf, welcher als Dorn ausgebildet ist. Der Greifer besteht aus einem Schaft und einem Kopfteil. Das Kopfteil weist mindestens eine Auflagefläche für die Aufnahme mindestens eines plattenförmigen Gegenstandes auf.

Bevorzugt weist das Kopfteil des Greifers im Wesentlichen die Form eines Pfeils auf, wobei die Pfeilspitze abgeflacht ist und die beiden horizontal erstreckenden, rückseitigen Flächen mindestens eine Auflagefläche für die Aufnahme eines Sandwiches oder einer Zwischenplatte ausbilden.

Das Kopfteil des Greifers ist gegenüber der Längsachse des (Greifer-) Schaftes entweder mittig oder außermittig angeordnet. Durch eine außermittige Anordnung des Kopfteils ergibt sich der Vorteil, dass die eine rückseitige Auflagefläche größer ausgebildet ist, als die gegenüberliegende Auflagefläche.

Durch eine Relativbewegung wird nun mindestens ein plattenförmiger Gegenstand des Stapels gegenüber dem Greifer verschoben. Die Relativbewegung erfolgt durch eine Verschiebevorrichtung auf einer horizontalen Ebene (X-Achse) in Richtung des Greifers. Es findet somit eine Querbewegung des plattenförmigen Gegenstandes gegenüber der Vorrichtung statt, wobei der Greifer in seiner Position verbleibt.

Der Greifer ist Bestandteil der erfindungsgemäßen Vereinzelungsvorrichtung und ist vertikal verschiebbar (Y-Achse). Die vertikale Bewegung des Greifers erfolgt beispielsweise mit einem Pneumatik-Zylinder, einem Spindelantrieb oder dergleichen.

Bei einer bevorzugten Ausführungsform ist der Greifer federbelastet innerhalb der (Vereinzelungs-)Vorrichtung angeordnet. Durch eine Beaufschlagung mit Druckluft wird die Druckfeder vorgespannt und schiebt den Greifer nach unten in Richtung des Stapels. Dadurch wird der Klemmspalt (kurzzeitig) vergrößert und kann den plattenförmigen Gegenstand aufnehmen. Im Anschluss daran wird die Zufuhr der Druckluft abgestellt, die Druckfeder zieht den Greifer wieder nach oben und der Klemmspalt wird verringert.

Bevorzugt befindet sich die Auflagefläche für den mindestens einen plattenförmigen Gegenstand auf der Rückseite des Kopfteils. Dies bedeutet, dass die Auflagefläche in Richtung der Vereinzelungsvorrichtung ausgerichtet ist. Auf der gegenüberliegenden Seite der Auflagefläche weist die Vereinzelungsvorrichtung eine Platte auf, welche als Anschlagfläche für den vereinzelten plattenförmigen Gegenstand dient.

Zwischen der Auflagefläche des Greifers und der Platte der Vereinzelungsvorrichtung bildet sich ein Freiraum, welcher im Folgenden als Klemmspalt bezeichnet wird. Der Klemmspalt nimmt den zu vereinzelnden plattenförmigen Gegenstand auf und kann durch eine Verschiebebewegung des Greifers in Y-Achse entweder vergrößert oder verringert werden. Eine Vergrößerung des Klemmspaltes ist immer dann sinnvoll, wenn ein neuer plattenförmiger Gegenstand mit Hilfe der Verschiebevorrichtung in X-Achse von dem Stapel und auf die Auflagefläche des Kopfteils des Greifers verschoben wird. Des Weiteren erfolgt durch eine Veränderung des Klemmspalts eine Anpassung an unterschiedliche Sandwich- oder Zwischenplatten-Dicken.

Durch eine Bewegung des Greifers in Y-Richtung (nach oben) wird der Klemmspalt verringert und der plattenförmigen Gegenstandes gegenüber der Platte der Vorrichtung festgeklemmt. Es findet hierbei insbesondere eine Klemmung des plattenförmigen Gegenstandes im Bereich dessen Ausnehmung (Mittelloch) statt.

Die Verschiebevorrichtung ist wird von einem Antrieb, wie z.B. von einem Pneumatikzylinder, einem Riemenantrieb, einem Spindelantrieb oder dergleichen bewegt. Generell bewegt sich die Verschiebevorrichtung in horizontaler Richtung (X-Achse) auf einer Ebene. Es ist jedoch auch möglich, dass die Verschiebevorrichtung in Y-Achse bewegbar ist. Dies ist immer dann sinnvoll, wenn z.B. eine Ausrichtung der Verschiebevorrichtung gegenüber dem Stapel mit plattenförmigen Gegenständen erfolgen soll, um z.B. gezielt nur den obersten plattenförmigen Gegenstand gegenüber dem Stapel zu verschieben.

Die gesamte Vereinzelungsvorrichtung kann eine 3-Achsbewegung ausführen und dadurch gezielt den Greifer in die mindestens eine Ausnehmung des plattenförmigen Gegenstandes einfahren bzw. positionieren.

Die Vorrichtung weist ferner mehrere Sensoren auf, mit welchen beispielsweise feststellbar ist, wo sich die Vorrichtung befindet, wie die Ausrichtung der Vorrichtung bzw. die Ausrichtung des Greifers gegenüber dem Plattenstapel ist, wie viele plattenförmige Gegenstände sich noch auf dem Stapel befinden, wo sich der oberste plattenförmige Gegenstand befindet und wo sich der darunterliegende plattenförmige Gegenstand befindet und/oder wie viele plattenförmige Gegenstände auf dem Stapel vorhanden sind.

Bei einer weiteren bevorzugten Ausführungsform weist die erfindungsgemäße Ausführungsform eine zusätzliche Hubeinrichtung für den Stapel aus plattenförmigen Gegenständen auf. Die Hubeinrichtung weist einen innen liegenden Rahmen auf, welcher in seiner Abmessung veränderbar ist und dadurch gezielt an die Größe der zu haltenden, plattenförmigen Gegenstände angepasst werden kann. Des Weiteren kann der innenliegende Rahmen in Y-Achse nach oben und unten verfahren werden. Damit ist es möglich den Stapel aus plattenförmigen Gegenständen bzw. den obersten plattenförmigen Gegenstand in Richtung des Greifers und der Verschiebebewegung zu bewegen.

Ferner kann die Hubeinrichtung einen Antrieb aufweisen, welcher eine Bewegung in 3-Achsen ermöglicht. Dadurch kann der Stapel gezielt gegenüber dem Greifer ausrichtet werden.

Um den Ablösevorgang des mindestens einen plattenförmigen Gegenstandes von dem Stapel zu verbessern, weist die erfindungsgemäße Vorrichtung bevorzugt im Bereich der Platte und/oder im Bereich des Greifers mehrere Bohrungen auf, durch welche gezielt Druckluft in den Zwischenraum zwischen dem obersten und dem darunterliegenden plattenförmigen Gegenstand eingeblasen wird.

Folgende Verfahrensschritte lassen sich beispielsweise mit der erfindungsgemäßen Vorrichtung durchführen:
1. Einfahren des Greifers in mindestens eine Ausnehmung eines plattenförmigen Gegenstandes;
2. Verschieben des zumindest obersten plattenförmigen Gegenstandes des Stapels mit einer Verschiebevorrichtung in Querrichtung zur Längsachse des Stapels auf eine Auflagefläche des Greifers;
3. Fixierung des aufgenommenen, plattenförmigen Gegenstandes auf der Auflagefläche des Greifers durch eine vertikale Bewegung des Greifers in Richtung der Vorrichtung;
4. Abheben der Vorrichtung von dem Stapel zusammen mit dem mindestens einen plattenförmigen Gegenstand.

Die vorliegende Erfindung ist nicht auf die Relativbewegung zwischen dem Stapel und dem Greifer der Vorrichtung beschränkt. Es ist vielmehr auch möglich, dass die Vorrichtung mindestens einen vertikal bewegbaren Greifer aufweist und aufgrund einer Relativbewegung zwischen dem Greifer und dem Stapel mindestens ein plattenförmiger Gegenstand von dem Stapel lösbar und abhebbar ist, wobei der Greifer als Klemmvorrichtung ausgebildet ist, welche in eine Ausnehmung des plattenförmigen Gegenstandes einfahrbar ist und dass durch die Relativbewegung die Klemmvorrichtung mindestens einen plattenförmigen Gegenstand festklemmt und vom Stapel abhebt.

Bei einer bevorzugten Ausführungsform weist die Klemmvorrichtung mindestens eine bewegbare Klemmbacke auf. Bevorzugt sind drei Klemmbacken im Abstand von 120° am Umfang des Greifers angeordnet. Diese Ausführungsform wird als 3-Backengreifer bezeichnet. Die Klemmbacken sind bewegbar und lassen sich stufenlos verstellen. Die Verstellung erfolgt beispielsweise mit einem Pneumatikzylinder oder dergleichen.

Die Klemmbacken können radial auseinander und wieder zusammengefahren werden. Durch das Auseinanderfahren findet eine Spannbewegung statt, wobei sich die Klemmbacken an den Rand der Ausnehmung des plattenförmigen Gegenstandes anlegen und festspannen. Dadurch ist der oberste plattenförmige Gegenstand von dem Stapel gegenüber dem Greifer fixiert und kann von dem Stapel abgehoben werden.

Der Greifer ist vertikal stufenlos verstellbar innerhalb der Vereinzelungsvorrichtung angeordnet. Durch die stufenlose Verstellbarkeit des Greifers findet eine individuelle Anpassung an die jeweilige Dicke bzw. Höhe des abzuhebenden plattenförmigen Gegenstandes statt.

Um die verbleibenden plattenförmigen Gegenstände während des Vereinzelungsprozesses auf dem Stapel zu fixieren weist die Ausführungsform bevorzugt einen Dorngreifer auf, welcher von unten in die Ausnehmungen des Stapels einfährt und dort mithilfe von ausfahrbaren Klemmbacken die restlichen plattenförmigen Gegenstände festhält. Die genaue Positionierung des Dorngreifers innerhalb des Stapels erfolgt durch Sensoren.

Bei einer weiteren bevorzugten Ausführungsform ist die Klemmvorrichtung des Greifers als Parallelgreifer ausgebildet. Der Parallelgreifer klemmt den obersten plattenförmigen Gegenstand eines Stapels fest und hebt diesenanschließend von dem Stapel ab. Der Parallelgreifer weist bevorzugt drei Klemmbacken auf, welche in einem Abstand von 120° versetzt zueinander angeordnet sind.

Bevorzugt kann der Greifer (Parallelgreifer) eine Drehbewegung um seine Längsachse ausführen. Die Drehbewegung des Greifers ist insbesondere während des Abhebevorganges des obersten plattenförmigen Gegenstandes nützlich, da dadurch das Ablösen von dem darunterliegenden plattenförmigen Gegenstand unterstützt wird.
Während des Abhebevorganges fährt ein Niederhalter von oben auf den Stapel herunter und fixiert zumindest den obersten plattenförmigen Gegenstand.

Optional fährt gleichzeitig ein Dorngreifer von unten in die Ausnehmungen des Stapels ein und hält die restlichen plattenförmigen Gegenstände mithilfe von ausfahrbaren Klemmbacken fest.

Die Klemmvorrichtung des Greifers mit bewegbaren Klemmbacken kann beispielsweise folgende Verfahrensschritte ausführen:
1. Einfahren des Greifers in mindestens eine Ausnehmung eines plattenförmigen Gegenstandes, wobei die Klemmbacken eingefahren sind;
2. Ausfahren der Klemmbacken, welche sich an den Rand der Ausnehmung des plattenförmigen Gegenstandes anlegen.
3. Abheben der Vorrichtung von dem Stapel zusammen mit dem mindestens einen plattenförmigen Gegenstand.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

### Es zeigen:

- Figur 1:: Detail Zwischenplatte / Sandwich
- Figur 2:: Stapel mit Zwischenplatten und Sandwiches
- Figur 3:: Spezielle Dornausführung
- Figur 4:: Freiraum Sandwich
- Figur 5:: Einfahren Dorn in Freiraum
- Figur 6:: Detail Querverschiebung
- Figur 7:: Verschiebevorgang Sandwich
- Figur 8:: Druckluftbeaufschlagung / Klemmspaltvergrößerung
- Figur 9:: Druckluftverringerung / Klemmspaltverkleinerung
- Figur 10:: Abhebevorgang
- Figur 11:: Abhebevorrichtung inkl. Backengreifer
- Figur 12:: Freiraum Sandwich
- Figur 13:: Sicherung im Freiraum mittels Dorngreifer
- Figur 14:: Detailansicht 3-Backengreifer
- Figur 15:: Ausführungsdetail Backengreifer
- Figur 16:: Detail Dorngreifer

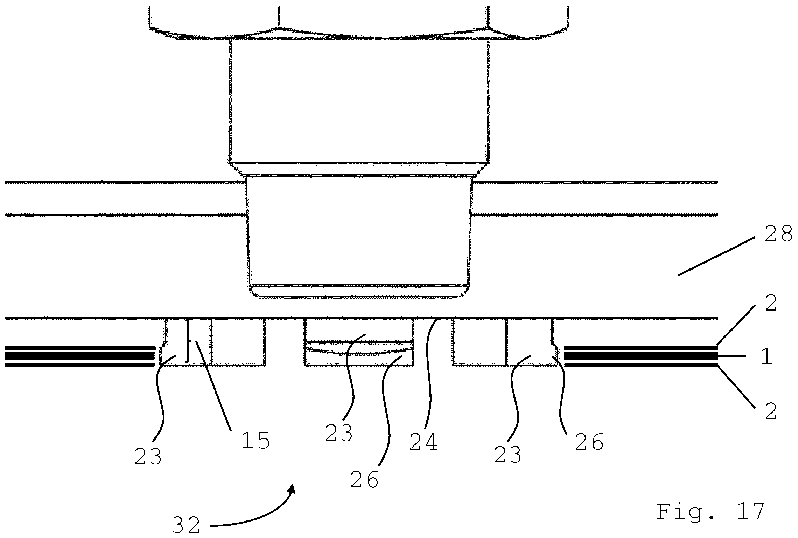

- Figur 17:: Position Greiftiefe Sandwich
- Figur 18:: Position Greiftiefe Zwischenplatte
- Figur 19:: Gegenüberstellung Greifposition Sandwich / Zwischenplatte
- Figur 20:: Einfahrt: Greifer geschlossen
- Figur 21:: Abheben: Greifer offen
- Figur 22:: Produkt-Detail mit Zentrierung aus Metall (Schnitt)
- Figur 23:: Positionierung Niederhalter
- Figur 24:: Positionierung Dorn
- Figur 25:: Parallelgreifer
- Figur 26:: Darstellung eines Sandwichs
- Figur 27:: Darstellung zweier übereinander angeordneter Sandwiches
- Figur 28:: Schnittdarstellung durch einen Sandwich
- Figur 29:: Detailansicht N der Schnittdarstellung nach Figur 28
- Figur 30:: Draufsicht auf einen eingefahrenen 3-Backengreifer
- Figur 31:: Draufsicht auf einen ausgefahrenen 3-Backengreifer in Klemmposition

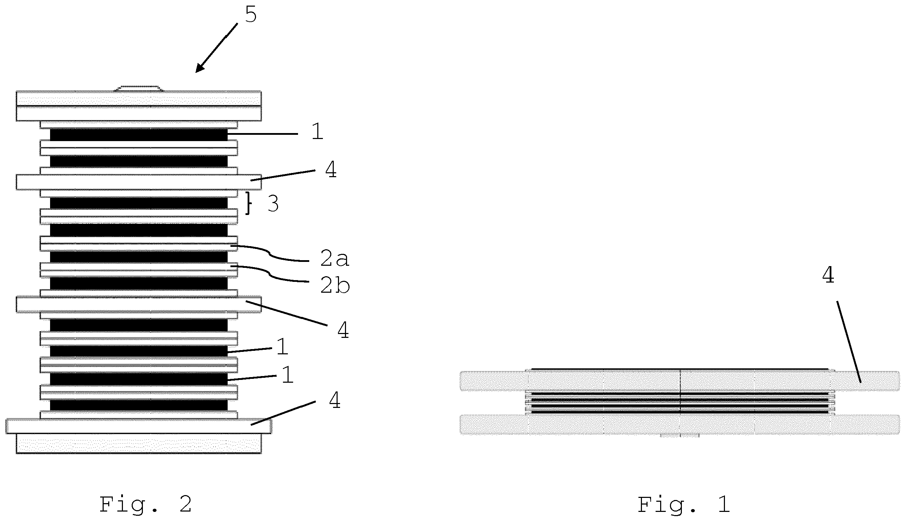

Figur 1 zeigt ein Paket mit Zwischenplatten 4 und Sandwiches 3. Die Sandwiches 3 sind übereinander angeordnet und teilweise durch die Zwischenplatten 4 getrennt. Der Sandwich 3 besteht im Wesentlichen aus einer unteren Trennschicht 2b, einer mittigen Schleifscheibe 1 und einer oberen Trennschicht 2a.

Mit der Figur 2 wird ein Stapel 5 mit übereinander angeordneten Sandwiches 3 gezeigt. Mehrere Sandwiches 3 sind durch eine Zwischenplatte 4 getrennt. Zwischen den übereinander angeordneten Sandwiches 3 befindet sich teilweise eine Zwischenplatte 4, welche beispielsweise aus einem Metall besteht. Die Zwischenplatte 4 soll ein späteres Vereinzeln der Sandwiches 3 erleichtern. Solch ein Stapel 5 wird im Rahmen des Herstellungsverfahrens der Schleifscheibe 1 in einem Brennofen mit Wärme behandelt und muss anschließend wieder vereinzelt werden.

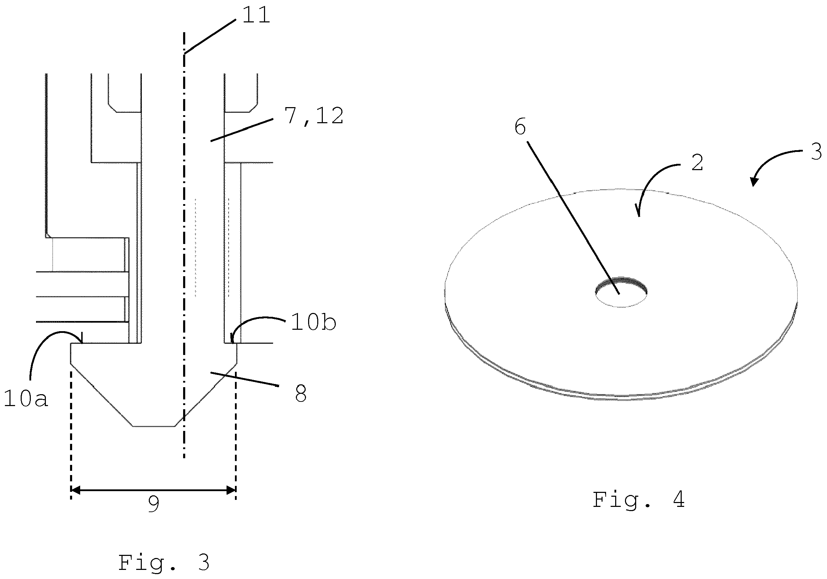

Mit der Figur 3 wird der erfindungsgemäße Greifer 7 gezeigt, welcher als Dorn ausgebildet ist. Der Greifer 7 weist bevorzugt einen zylindrischen Schaft 12 auf, an welchen sich am stirnseitigen Ende ein radial erweitertes Kopfteil 8 anschließt. Die Form des Kopfteils 8 entspricht bevorzugt einer Pfeilspitze. Gemäß der Figur 3 ist die Pfeilspitze stumpf ausgebildet.

Das Kopfteil 8 weist zwei Flügel auf, wobei die Oberseiten der Flügel jeweils als Auflageflächen 10a, 10b für einen plattenförmigen Gegenstand dienen. Die Auflagefläche 10a ist größer ausgebildet, als die Auflagefläche 10b. Hierauf ist die Erfindung jedoch nicht beschränkt.

Bevorzugt sind die Auflageflächen 10a, 10b glatt bzw. eben ausgebildet. Es ist jedoch auch möglich, dass die Auflageflächen 10a, 10b strukturiert ausgebildet sind, wodurch der zu greifende, plattenförmige Gegenstand (z.B. der Sandwich 3) leichter aufgenommen bzw. gehalten werden kann. Ferner kann die Auflagefläche 10a, 10b mit z.B. einer leicht haftenden Oberfläche versehen sein. Des Weiteren ist es auch möglich, dass die Auflagefläche 10a, 10b eine anziehende Wirkung hat, welche beispielsweise aufgrund eines Magnets oder durch ein Vakuum erreicht wird.

Figur 4 zeigt einen Sandwich 4 mit einer mittigen, kreisrunden Ausnehmung 6. Der Durchmesser der Ausnehmung 6 ist geringfügig größer, als der Durchmesser 9 des Kopfteils 8 des Greifers 7. Entscheidend ist jedoch, dass der Durchmesser 9 des Kopfteils 8 so gewählt wird, dass ein Durchgreifen des Kopfteils 8 durch die Ausnehmung 6 des Sandwiches 3 noch möglich ist.

Die Ausnehmung 6 ist ferner bei den Trennschichten 2 und Zwischenplatten 4 ebenfalls vorhanden, so dass der Dorn 6 mit seinem Kopfteil 8 auch durch diese Ausnehmungen hindurchgreifen kann. Unter der Ausnehmung 6 versteht die vorliegende Erfindung sämtliche Ausnehmungen der plattenförmigen Gegenstände.

Die folgenden Figuren zeigen eine erste Variante des erfindungsgemäßen Verfahrens

### Sandwich gegeneinander verschieben

Um ein Sandwichpaar 3 gegenseitig verschieben zu können, sind folgende Schritte erforderlich, welche mit den folgenden Figuren gezeigt werden.

### Schritt 1: Einfahren

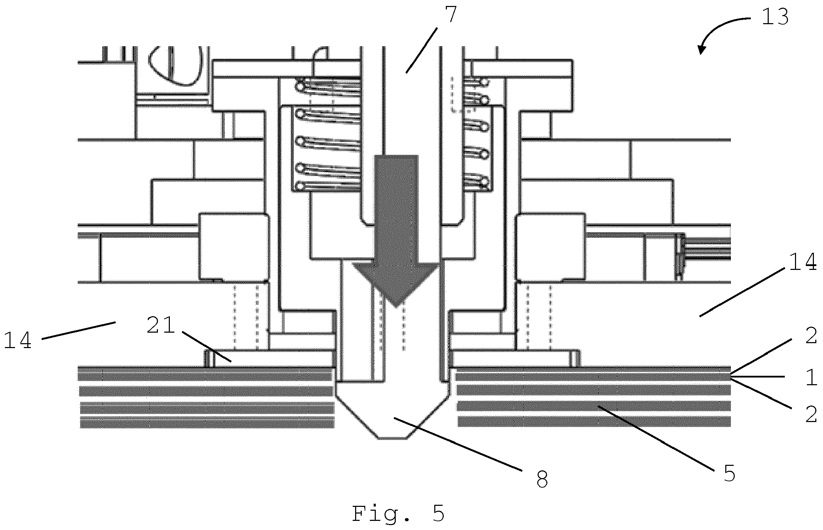

Mit der Figur 5 wird die Vorrichtung 13 mit der Verschiebevorrichtung 14 und dem Greifer 7 gezeigt. Die Vorrichtung 13 wird mithilfe von Sensoren an den Stapel 5 angenähert und/oder auf den Stapel 5 aufgesetzt. Im Anschluss daran wird der Greifer 7 in die Ausnehmungen 6 der Trennschichten 2, Schleifscheiben 1 und Zwischenplatten 4 eingefahren.

### Schritt 2: Verschieben

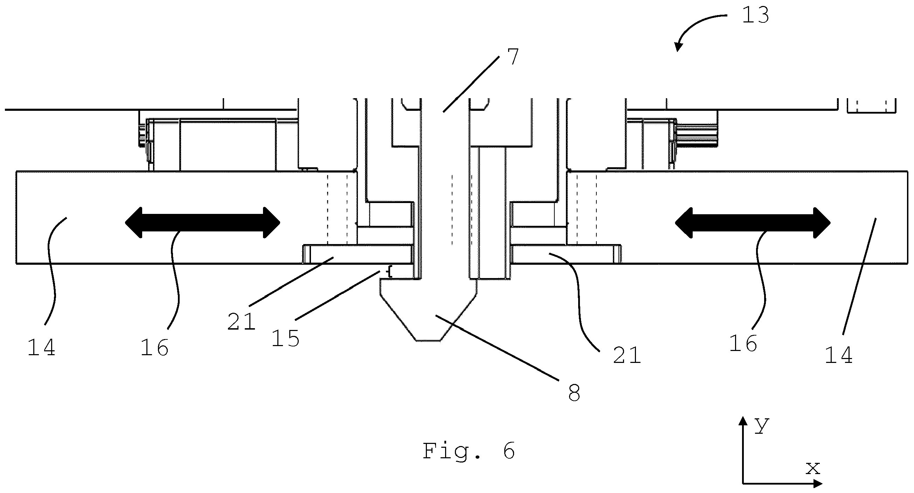

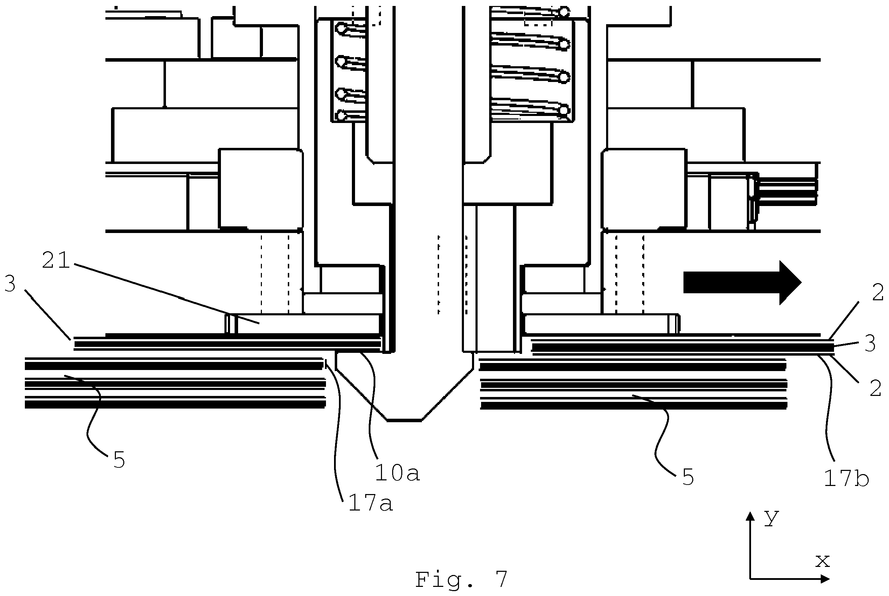

Im nächsten Schritt wird gemäß den Figuren 6 und 7 durch eine Querbewegung der Verschiebevorrichtung 14 in X-Richtung (horizontal) der oberste Sandwich 3 aus dem Stapel 5 verschoben. Der Greifer 7 bleibt in seiner ursprünglichen Position. Durch die spezielle Form des Greifers 7 bildet sich ein Klemmspalt 15 zwischen dem Kopfteil 8 und der Platte 21 der Vorrichtung 13.

Die Verschiebevorrichtung 14 dient zum Verschieben von einzelnen plattenförmigen Gegenständen (z.B. Sandwich, Schleifscheibe, Trennschicht), welche übereinander angeordnet sind. Als Antrieb für die Verschiebevorrichtung 14 wird beispielsweise ein Pneumatik-Zylinder eingesetzt. Es ist jedoch auch ein Spindelmotor, ein Riemenantrieb oder dergleichen möglich.

Mit Hilfe der Verschiebevorrichtung 14 wird der oberste Sandwich 3 horizontal in X-Richtung verschoben. Durch die Verschiebung des Sandwiches 3 in horizontaler Richtung wird der Sandwich 3 mit seiner Ausnehmung 6 gegenüber dem Greifer 7 bzw. gegenüber dem Kopfteil 8 des Greifers 7 verschoben (Figur 7). Durch den Verschiebevorgang wird die Auflagefläche 10a ausgehend von der Ausnehmung 6 unter die Unterseite des Sandwiches geschoben. Das Kopfteil 9 greift damit durch die Ausnehmung 6 unter den Sandwich 3. Dies bedeutet, dass die linke Unterseite 17a des obersten Sandwiches 3 nach der Verschiebung auf der Auflagefläche 10a des Kopfteils 8 aufliegt, während die andere Unterseite 17b des Sandwiches teilweise über den Außenumfang des verbleibenden Stapel (Reststapel) 5 übersteht.

Das Kopfteil 8 des Greifers 7 ist somit dergestalt ausgebildet, dass es mindestens eine Auflagefläche 10a, 10b für mindestens einen Sandwich 3 bildet und dadurch der Sandwich 3 von dem Stapel 5 in Y-Richtung abhebbar ist.

### Schritt 3: Greifen

Durch eine Bewegung des Greifer 7 in Y-Richtung findet eine Verringerung des Klemmspaltes 15 statt. Als Antrieb für den Greifer 7 wird beispielsweise ein Pneumatik-Zylinder oder ein Spindelantrieb eingesetzt. Es besteht unter anderem die Möglichkeit unterschiedliche Sandwichdicken bzw. die Zwischenplatten durch automatisches Verstellen des Klemmspaltes 15 abzuheben.

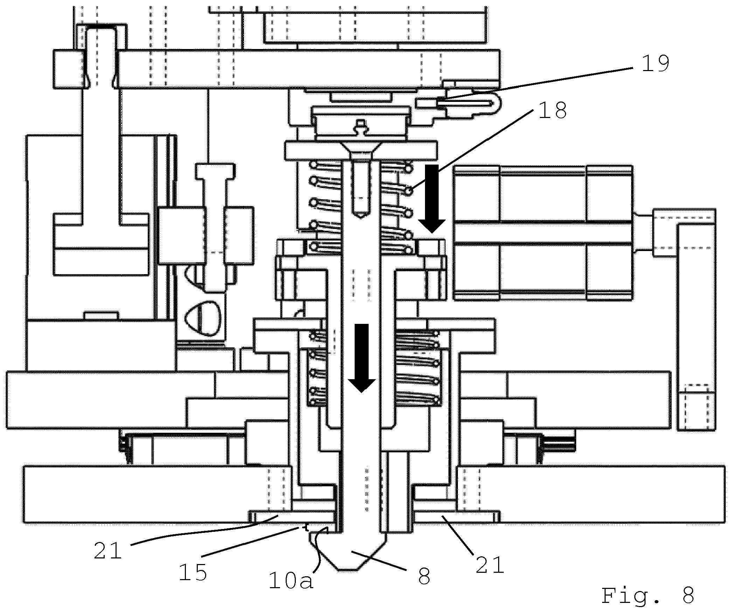

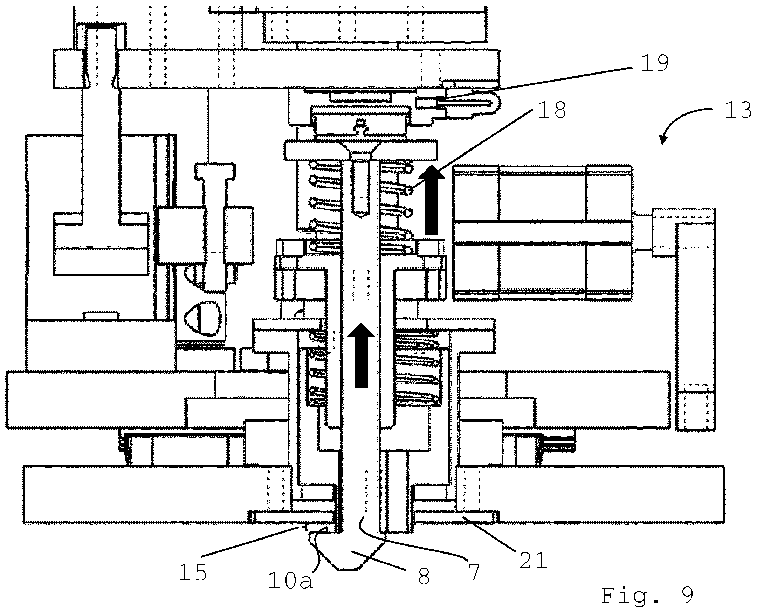

Der Greifer 7 ist gemäß den Figuren 7 und mittels einer Druckfeder 18 vorgespannt. Gemäß der Figur 8 wird durch die Beaufschlagung mit Druckluft 19 die Druckfeder 18 vorgespannt, so dass der Greifer 7 nach unten geschoben wird und sich der Klemmspalt 15 vergrößert. Wird die Druckkraft 19 verringert, so entspannt sich die Druckfeder 18 wieder und der Greifer 7 bewegt sich in Y-Richtung nach oben und verringert somit den Klemmspalt 15 (Figur 9).

### Schritt 4: Abheben

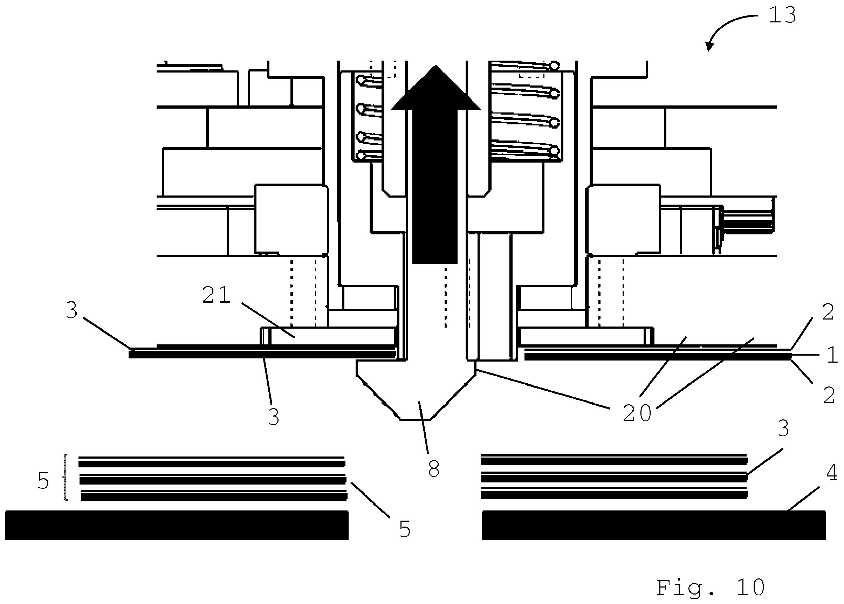

Figur 10 zeigt den Abhebevorgang der gesamten Vorrichtung 13 zusammen mit dem obersten Sandwich 3 des Stapels 5. Der Sandwich 3 liegt auf der Auflagefläche 10a des Kopfteils 8 auf. Die Druckfeder 18 hat den Greifer 7 nach oben gezogen, so dass der Sandwich 3 im Klemmspalt 15 zwischen der Auflagefläche 10a und der Unterseite der Platte 21 gehalten ist.

Im Bereich der Verschiebevorrichtung 14 sind Druckluftbohrungen 20 vorhanden, durch welche während des Abhebevorganges Druckluft eingeblasen wird, um die Haftung zwischen dem oberen, abzuhebenden Sandwich 3 und dem unteren, auf dem Stapel 5 verbleibenden Sandwich 3 zu verringern.

Bei der vorliegenden Ausführungsform werden einzelne Sandwich-Platten 3 gegeneinander verschoben. Aufgrund der besonderen Form des Kopfteils 8 des Greifers 7 ist es möglich, dass nur ein Sandwich 3 von dem Sandwichstapel (Paket 5) verschiebbar ist, während die anderen Sandwiches 3 fluchtend auf dem Paketstapel verbleiben. Sobald der verschobene Sandwich 3 auf der hierfür vorgesehenen Auflagefläche 10a des Kopfteils 8 aufliegt, kann dieser von dem Greifer 7 in Y-Richtung von dem Paket 5 abgehoben werden und an einer anderen Stelle abgelegt werden.

### 2. Sandwich voneinander abheben

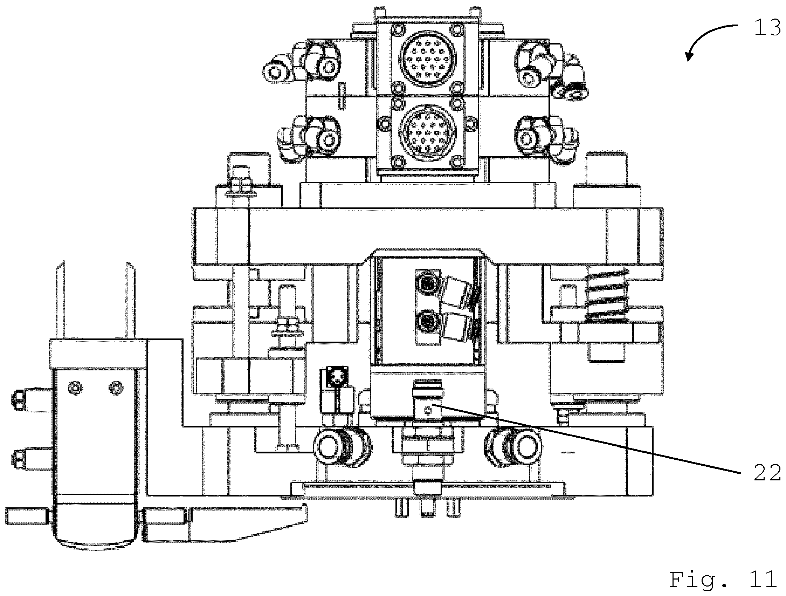

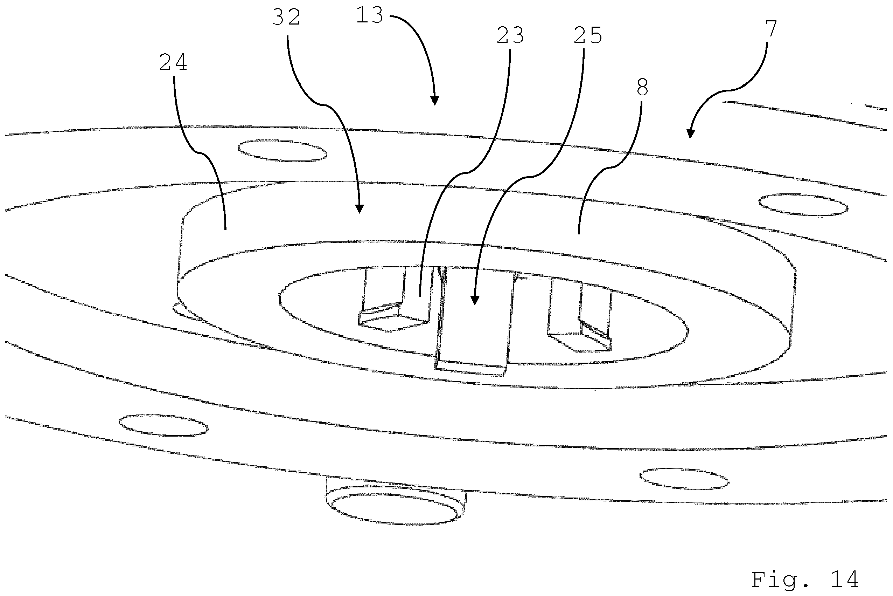

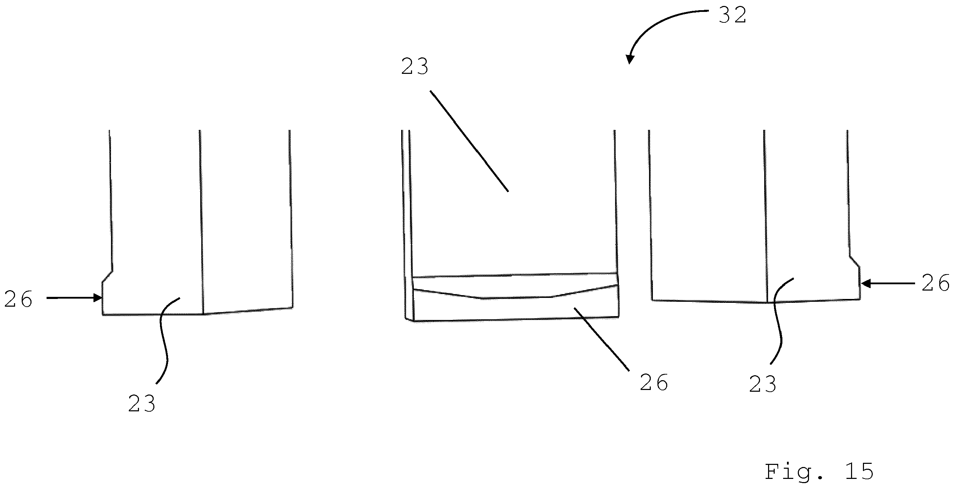

Um ein Sandwichpaar voneinander zu trennen und gegenseitig abheben zu können, wird bei der vorliegenden Ausführungsform ein "3-Backengreifer" eingesetzt (Figur 11), welcher in die Ausnehmung 6 des Sandwiches 3 eingreift. Der 3-Backengreifer 25 wird im Detail mit den Figuren 14 und 15 gezeigt.

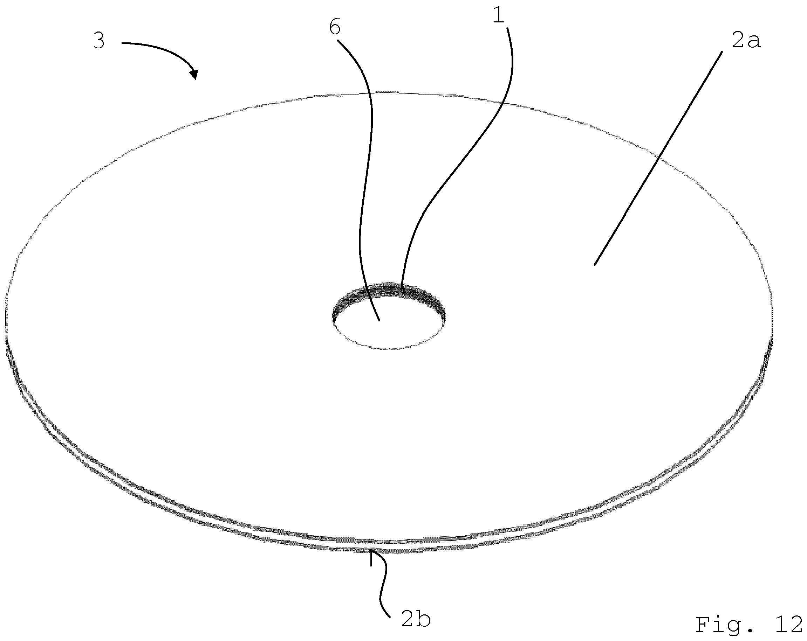

Der Aufbau des Sandwiches 3 ergibt sich aus der Figur 12 und besteht bevorzugt aus einer oberen Trennschicht 2a, einer dazwischenliegenden Schleifscheibe 1 und einer unteren Trennschicht 2b.

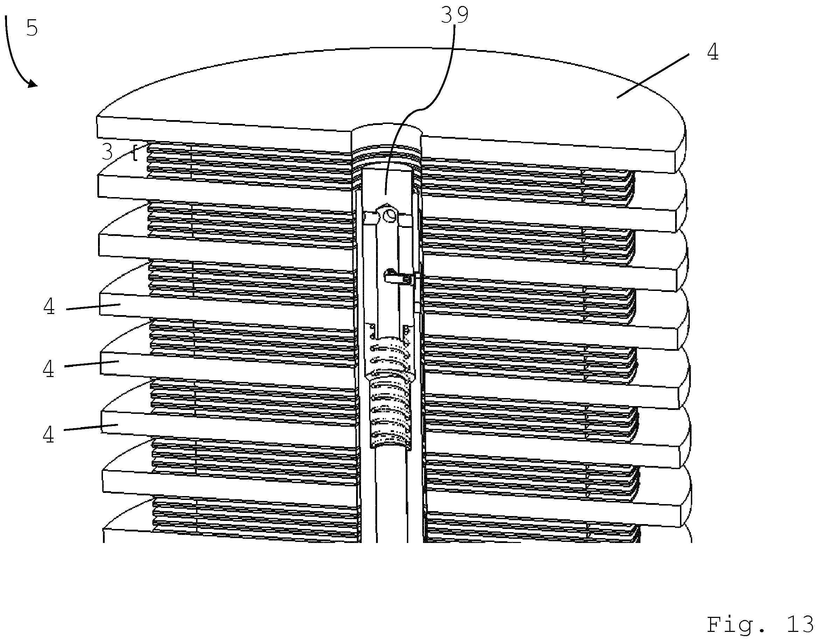

Figur 13 zeigt einen Dorngreifer 39, welcher von unten in den Stapel 5 einfährt und gezielt die plattenförmigen Gegenstände fixiert. Durch die Fixierung wird sichergestellt, dass z.B. nur der oberste plattenförmige Gegenstand von dem Stapel 5 abgehoben wird.

Bei dem vorliegenden Verfahren wird in einem ersten Schritt die gesamte Vorrichtung 13 mittels (induktiver) Sensoren 22 an den Stapel 5 herangeführt, um einerseits den Sandwich 3, als auch die Zwischenplatten 4 greifen zu können. Dies erfolgt durch Variation der jeweiligen Greiftiefe.

Die Verstellung des Klemmspaltes 15 kann stufenlos mittels eines pneumatischen oder hydraulischen Zylinders, einem Spindelantrieb oder dgl. erfolgen.

Um zu erkennen, ob ein Sandwich 3 oder eine Zwischenplatte 4 vorliegt, sind diverse Sensoren 22 vorhanden, welcher bevorzugt im Bereich der Platte 21 angeordnet sind.

Gemäß der Figur 14 ist der Greifer 7 als die Klemmvorrichtung 32 mit Klemmbacken 23 ausgebildet, welche radial bewegbar an dem Greifer 7 angeordnet sind und durch eine radiale Spannbewegung (29, 30) den plattenförmigen Gegenstand (2, 3, 4) im Bereich seiner Ausnehmung (6) festklemmen. Die Klemmvorrichtung 32 wird ferner auch als 3-Backengreifer 25 bezeichnet.

Die Form der Klemmbacken 23 ergibt sich aus der Figur 15. Die Klemmbacke 23 weist einen Absatz 26 auf, welcher sich an die seitliche Fläche der Ausnehmung 6 anlegt.

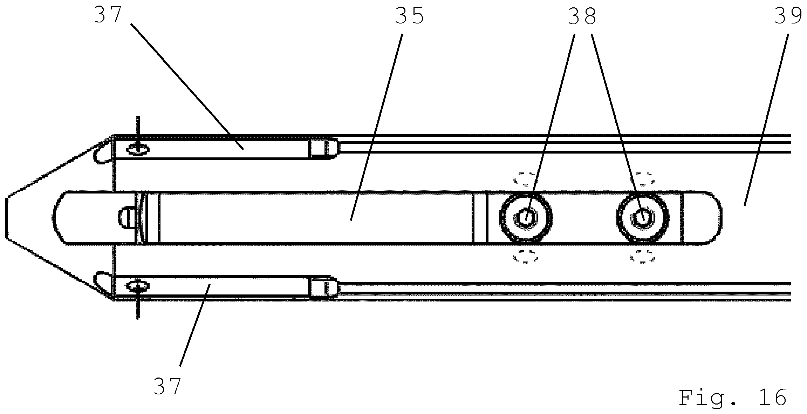

Figur 16 zeigt den Dorngreifer 7, welcher zur Fixierung der restlichen Sandwiches 3 auf dem Stapel 5 dient. Der Dorngreifer 39 greift hierzu von der Unterseite des Stapels 5 durch die Ausnehmungen 6 der Sandwiches 3 durch und klemmt diese gezielt mit Klemmbacken 35 fest. Bevorzugt sind drei Klemmenbacken 35 im Abstand von 120° am Umfang des Dorngreifers 39 angeordnet. Zur Bestimmung der richtigen Position des Dorngreifers 39 innerhalb des Stapels 5 weist der Dorngreifer 39 Sensoren 37 auf, welche bevorzugt als Lasersensoren ausgebildet sind.

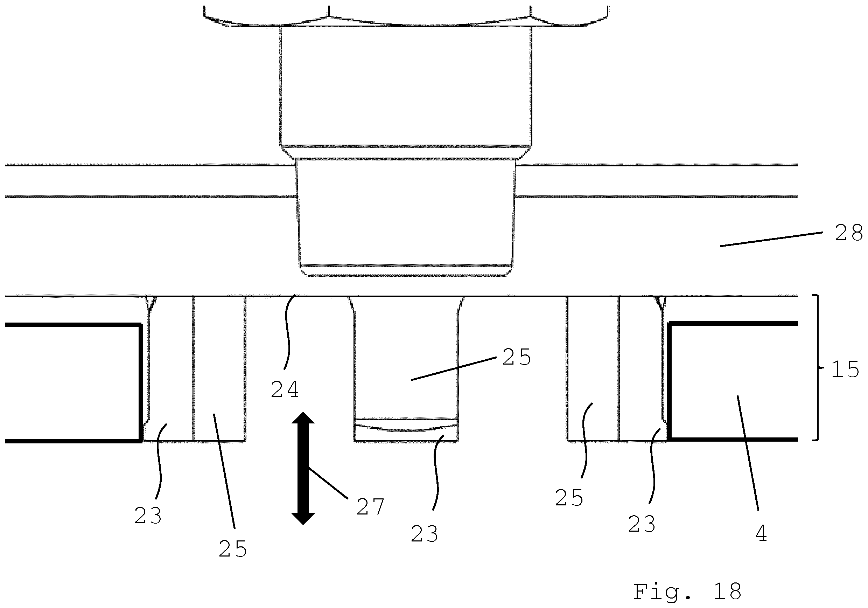

Die möglichen (variablen) Positionen des Greifers 25 (3-Backengreifer) in Bezug auf die Grundebene (Unterseite des Abstreifgreifers) können wie folgt dargestellt werden:
Die erforderliche Greiftiefe, d.h. der Abstand der Unterseite 24 der Vorrichtung 13 und des 3-Backengreifers 25 ist abhängig von dem zu greifenden plattenförmigen Gegenstand. So benötigt ein Sandwich 3 einen geringeren Klemmspalt 15, als z.B. eine Zwischenplatte 4 (Figur 18). Der Klemmspalt 15 bzw. die Greiftiefe ist durch eine Bewegung des Greifers 25 in Y-Richtung 27 veränderbar. Durch die Bewegung des Greifers 25 wird insbesondere der Absatz 26 der Grundbacke 23 verändert, mit welchem der plattenförmige Gegenstand, wie z.B. der Sandwich 3 oder die Zwischenplatte 4 gegriffen wird.

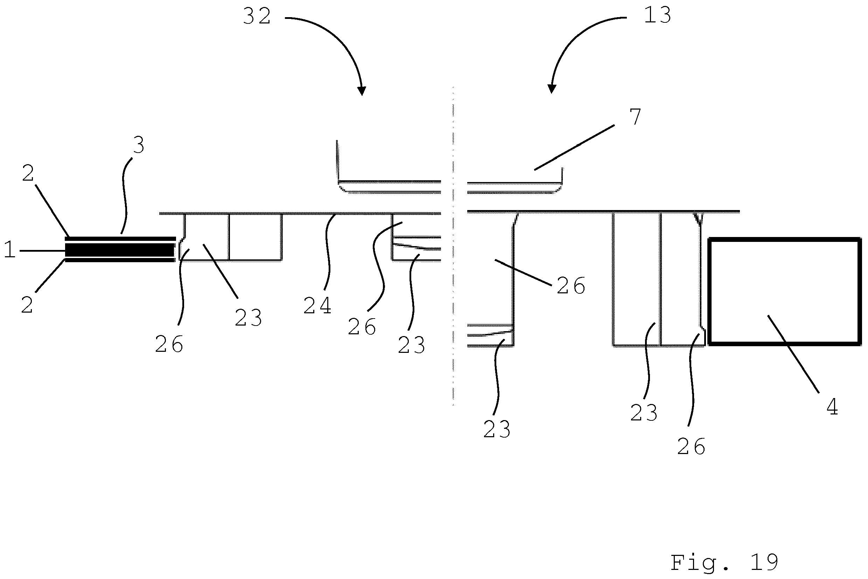

Zur Darstellung der unterschiedlichen Greifpositionen werden diese nachfolgend in einer Gegenüberstellung mit der Figur 19 skizziert.
Auf der linken Seite wird mit Hilfe der Grundbacke 23 und dem Absatz 23 ein Sandwich gegriffen, während auf der rechten Seite mit Hilfe der Grundbacke 23 und dem Absatz 23 eine Zwischenplatte 4 gegriffen wird.

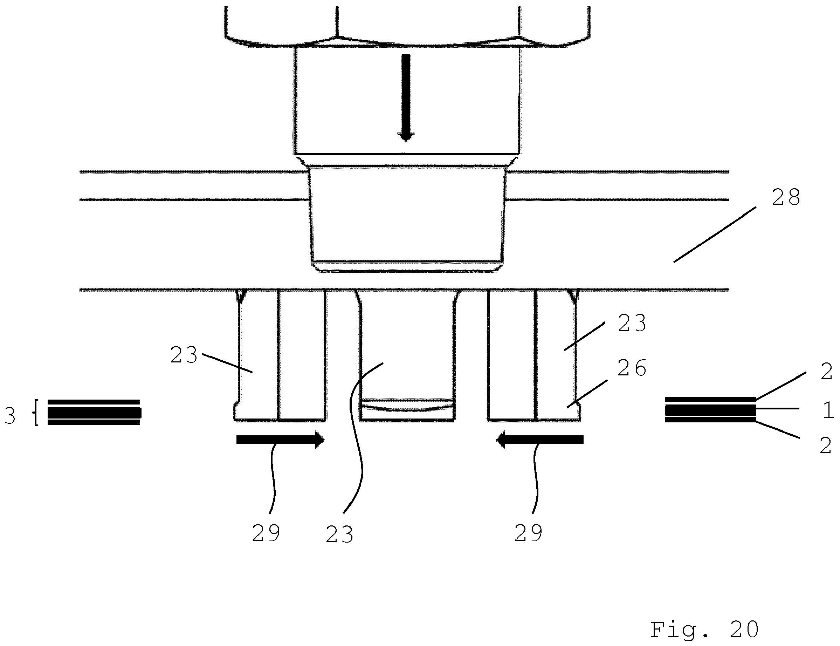

Figur 20 zeigt, dass die Grundbacken 23 in X-Richtung verschiebbar sind. Die kreisförmig angeordneten Grundbacken 23 lassen sich somit auseinander- und wieder zusammenfahren. Beim Auseinanderfahren (Spannbewegung Druck 30) der Grundbacken 23 wird der Umfang vergrößert und es findet eine Klemmung der plattenförmigen Gegenstände, wie z.B. des Sandwiches 3 oder der Zwischenplatte 4 statt.

Beim Zusammenfahren (Spannbewegung Zug 29) der Grundbacken 23 wird der Umfang verkleinert und die Grundbacken 23 von den plattenförmigen Gegenständen weggefahren (Figur 20). Das Zusammenfahren der Grundbacken 23 ist immer beim Einfahren des 3-Backenreifers 25 in die Ausnehmungen 6 der plattenförmigen Gegenstände des Pakets 5 notwendig, da die Ausnehmung 6 eine Engstelle darstellt.

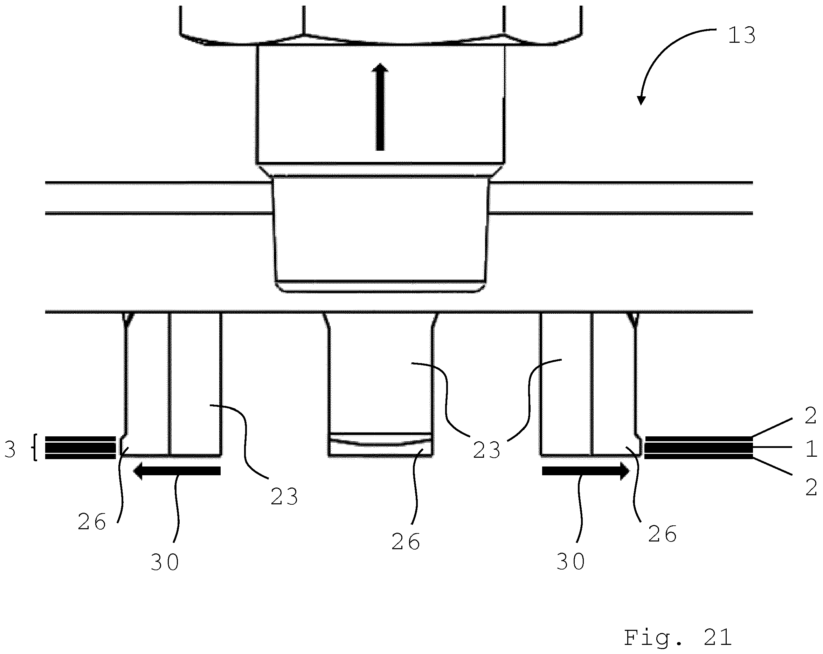

Wird eine Klemmung zum Abheben der plattenförmigen Gegenstände von einem Paketstapel 5 benötigt, fahren die Klemmbacken 23 des Greifer 25 auseinander (Figur 21) und klemmen den Sandwich 3 oder die Zwischenplatte 4 im Bereich der Ausnehmung 6.

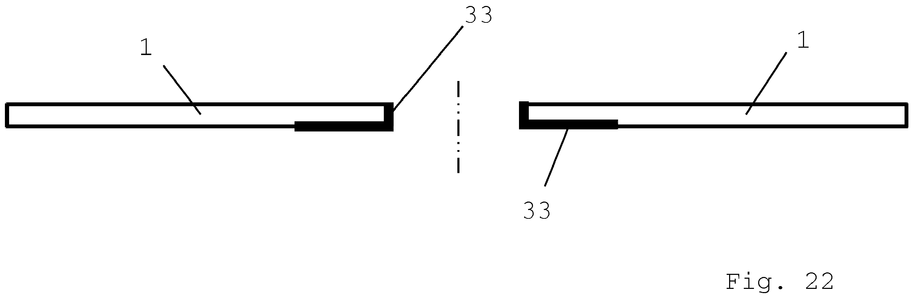

Figur 22 zeigt eine Schleifscheibe 1 mit Nabenteilen 33, welche später für eine Montage an einer Schleifmaschine benötigt werden.

### 3. Sandwich zueinander verdrehen und abheben

Bei dieser Ausführungsform wird das oberste Sandwich 3 mit Hilfe einer Klemmvorrichtung 32 in Form eines Parallelgreifers 31 fixiert. Die Position des zweiten, darunterliegenden Sandwiches 3 wird mit einem Sensor 22 ermittelt und durch eine weitere Vorrichtung, wie z.B. mit Klemmbacken fixiert. Durch eine Drehbewegung der oberen Klemmvorrichtung 32 und gleichzeitiger Abhebung des oberen Sandwiches 3 erfolgt die Trennung der beiden Sandwiches.

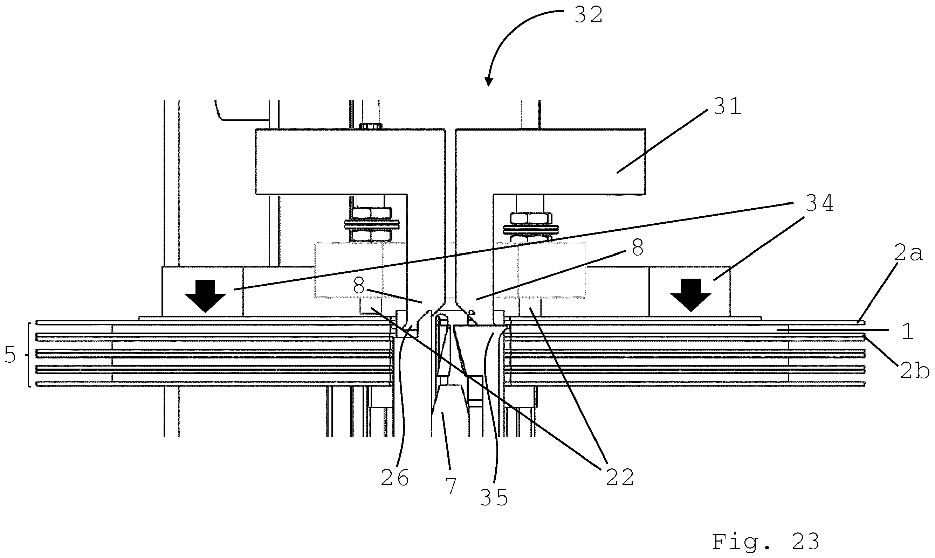

Gemäß der Figur 23 drückt ein Niederhalter 34 mittels eines Zylinders auf den Stapel 5. Der Zylinder misst zusätzlich die Höhe des Stapels 5 mit Hilfe eines integrierten Messsystems. Dies ist entscheidend, damit der Dorn 7 an der richtigen Stelle positioniert werden kann.

Mit Hilfe von induktiven Sensoren 22 wird festgestellt, wo sich die Trennschichten 2, die Zwischenplatte 4 und die Schleifscheiben 1 an oberster Position des Stapels 5 befinden.

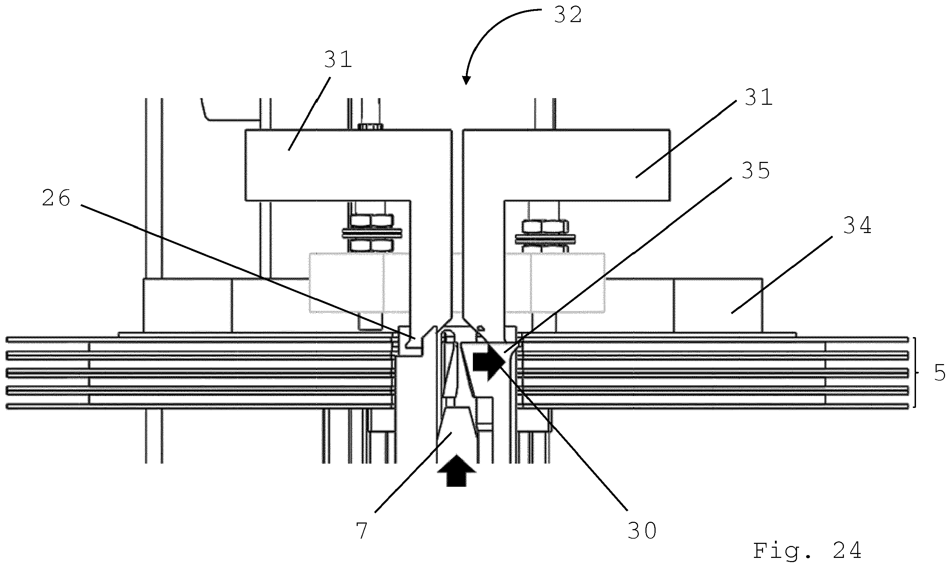

Gemäß der Figur 24 fährt der Dorn 7 nach oben in die Ausnehmungen 6 der plattenförmigen Gegenstände des Stapels 5 ein und drückt die drei Backen 23 zur Fixierung des Stapels 5 auseinander (Spannbewegung Druck 30). Bevorzugt sind die Backen 23 auf einem kreisförmigen Umfang und um 120° versetzt zueinander angeordnet.

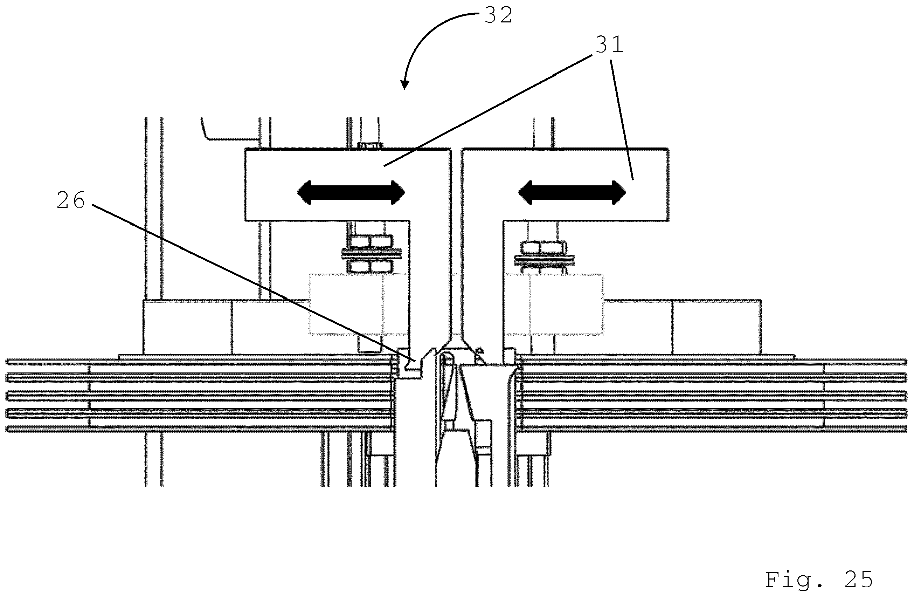

Pneumatisch gesteuerte Parallelgreifer 31 klemmt durch eine Querbewegung den obersten Sandwich 3 (Figur 25) und heben diesen von dem Stapel 5 ab. Bei einer bevorzugten Ausführungsform ist der Parallelgreifer 31 und/oder der Stapel 5 um seine Längsachse drehbar ausgebildet, so dass während den Abhebevorganges des obersten Sandwiches 3 dieser zusätzlich gedreht wird.

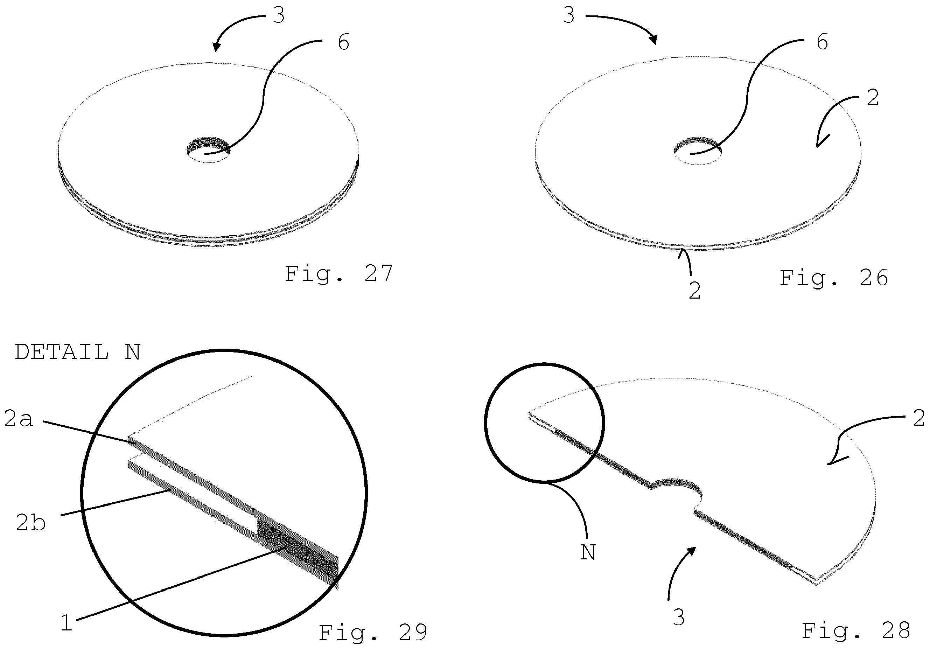

Mit den Figuren 26 bis 29 wird der Aufbau eines Sandwiches 3 noch einmal detailliert gezeigt. Der Sandwich 3 ist bevorzugt rund ausgebildet und weist eine mittige, runde Ausnehmung 6 auf. Die Schleifscheibe 1 ist von einer oberen Trennschicht 2a und von einer unteren Trennschicht 2b umgeben, welche bevorzugt aus einem Gewebe besteht.

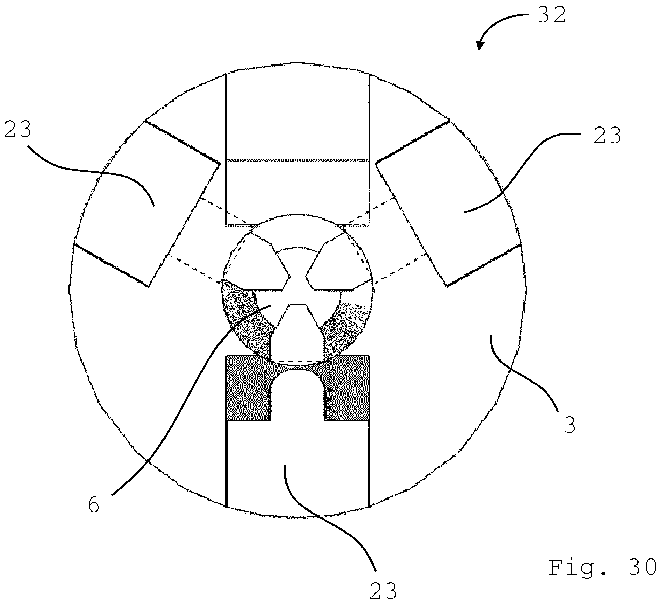

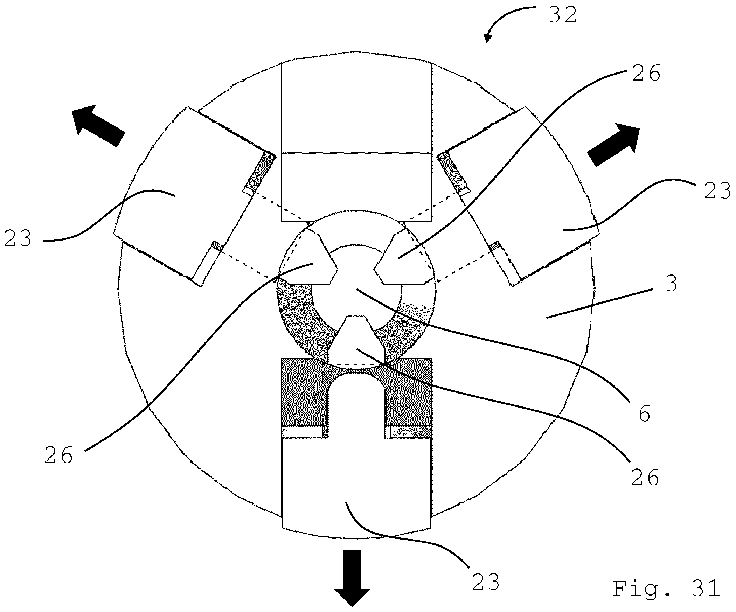

Die Figuren 30 und 31 zeigen den Greifer 7 in der Draufsicht. Da Greifer 7 ist als Klemmvorrichtung 32 ausgebildet, wobei drei Klemmbacken 23 im Abstand von 120° versetzt zueinander angeordnet. Die Klemmbacken 23 lassen sich auseinander und wieder einfahren.

### Zeichnungslegende

1. Schleifscheibe
2. Trennschicht
   Trennschicht oben 2a
   Trennschicht unten 2b
3. Sandwich
   oberster Sandwich 3a
   zweiter Sandwich 3b
4. Zwischenplatte
5. Stapel
6. Ausnehmung
7. Greifer
8. Kopfteil
9. Durchmesser von 8
10.Auflagefläche 10
11.Mittellinie von 12
12.Schaft von 7
13.Vorrichtung
14.Verschiebevorrichtung
15.Klemmspalt
16.Querverschiebung
17.Unterseite von 3
18.Druckfeder
19.Druckluft
20.Druckluftbohrung
21.Platte von 13
22.Sensor
23.Klemmbacke
24.Unterseite von 8
25.3-Backengreifer
26.Absatz
27.Richtung
28.Spanfutter
29.Spanbewegung (Zug)
30.Spannbewegung (Druck)
31.Parallelgreifer
32.Klemmvorrichtung
33.Nabenteil
34.Niederhalter
35.Klemmbacke
36.
37.Sensoren
38.Montageschrauben
39.Dorngreifer

## Patentansprüche

1. Vorrichtung zum Vereinzeln und Bewegen von plattenförmigen Gegenständen (2, 3, 4), insbesondere von Schleifscheiben (1) von einem Stapel (5), wobei die Vorrichtung mindestens einen vertikal bewegbaren Greifer (7, 25) aufweist und aufgrund einer Relativbewegung zwischen dem Greifer (7, 25) und dem Stapel (5) mindestens ein plattenförmiger Gegenstand von dem Stapel (5) lösbar und abhebbar ist, **dadurch gekennzeichnet, dass** am freien unteren Ende des Greifers (7, 25) ein Kopfteil (8) mit mindestens einer Auflagefläche (10, 10a, 10b) angeordnet ist, die in eine Ausnehmung (6) des plattenförmigen Gegenstandes einfahrbar ist und durch die Relativbewegung die Auflagefläche des Greifers (7, 25) den plattenförmigen Gegenstand untergreift und vom Stapel (5) abhebt.

2. Vorrichtung nach Anspruch 1, **dadurch gekennzeichnet, dass** die Relativbewegung zwischen Greifer (7, 25) und Stapel (5) durch eine Verschiebevorrichtung (14) erfolgt, welche den mindestens einen plattenförmigen Gegenstand (2, 3, 4) auf die Auflagefläche (10, 10a, 10b) des Kopfteils (8) schiebt.

3. Vorrichtung nach Anspruch 1 oder 2, **dadurch gekennzeichnet, dass** das Kopfteil (8) des Greifers (7, 25) zwischen der Auflagefläche (10, 10a, 10b) und der Vorrichtung einen Klemmspalt (15) ausbildet, welcher durch eine vertikale Bewegung des Greifers (7, 25) veränderbar ist und den mindestens einen plattenförmigen Gegenstand (2, 3, 4) festklemmt.

4. Vorrichtung nach einem der Ansprüche 1 bis 3, **dadurch gekennzeichnet, dass** das Kopfteil (8) des Greifers (7, 25) gegenüber der Längsachse des Greifers (7, 25) außermittig angeordnet ist und dadurch die eine Auflagefläche (10a) größer, als die andere Auflagefläche (10b) ist.

5. Vorrichtung zum Vereinzeln und Bewegen von plattenförmigen Gegenständen (2, 3, 4), insbesondere von Schleifscheiben (1) von einem Stapel (5), wobei die Vorrichtung mindestens einen vertikal bewegbaren Greifer (7, 25) aufweist und aufgrund einer Relativbewegung zwischen dem Greifer (7, 25) und dem Stapel (5) mindestens ein plattenförmiger Gegenstand von dem Stapel (5) lösbar und abhebbar ist, **dadurch gekennzeichnet, dass** der Greifer (7, 25) als Klemmvorrichtung (32) ausgebildet ist, welche in eine Ausnehmung (6) des plattenförmigen Gegenstandes einfahrbar ist und dass durch die Relativbewegung die Klemmvorrichtung (32) mindestens einen plattenförmigen Gegenstand festklemmt und vom Stapel (5) abhebt.

6. Vorrichtung nach Anspruch 5, **dadurch gekennzeichnet, dass** die Klemmvorrichtung (32) mindestens eine Klemmbacke (35) aufweist, welche radial bewegbar an dem Greifer (7, 25) angeordnet ist und durch eine radiale Spannbewegung (29, 30) den plattenförmigen Gegenstand (2, 3, 4) im Bereich seiner Ausnehmung (6) festklemmt.

7. Vorrichtung nach Anspruch 5 oder 6, **dadurch gekennzeichnet, dass** die Klemmbacke (35) mindestens einen Absatz (26) aufweist, welcher sich an die Innenseite der Ausnehmung 6 anlegt.

8. Vorrichtung nach einem der Ansprüche 5 bis 7, **dadurch gekennzeichnet, dass** die Klemmvorrichtung (32) als Parallelgreifer (31) ausgebildet ist, welcher drei am Umfang versetzt angeordnete Klemmbacken (23) aufweist, die durch eine Radialbewegung den plattenförmigen Gegenstand (2, 3, 4) im Bereich der Ausnehmung (6) festklemmen und dass die Klemmvorrichtung (32) eine Drehbewegung um ihre Längsachse ausführt.

9. Verfahren zum Vereinzeln und Bewegen von plattenförmigen Gegenständen (2, 3, 4), insbesondere von Schleifscheiben (1) von einem Stapel (5), wobei eine Vorrichtung (13) mindestens einen vertikal bewegbaren Greifer (7, 25) aufweist und aufgrund einer Relativbewegung zwischen dem Greifer (7, 25) und dem Stapel (5) mindestens einen plattenförmiger Gegenstand von dem Stapel (5) löst und abhebt, wobei das Verfahren durch folgende Verfahrensschritte gekennzeichnet ist:
9.1 Einfahren des Greifers (7, 25) in mindestens eine Ausnehmung (6) eines plattenförmigen Gegenstandes (2, 3, 4);
9.2 Verschieben des zumindest obersten plattenförmigen Gegenstandes (2, 3, 4) des Stapels (5) mit einer Verschiebevorrichtung (14) in Querrichtung zur Längsachse des Stapels (5) auf eine Auflagefläche (10, 10a, 10b) des Greifers (7, 25);
9.3 Fixierung des aufgenommenen, plattenförmigen Gegenstandes (2, 3, 4) auf der Auflagefläche (10, 10a, 10b) des Greifers (7, 25) durch eine vertikale Bewegung des Greifers (7, 25) in Richtung der Vorrichtung (13);
9.4 Abheben der Vorrichtung (13) von dem Stapel (5) zusammen mit dem mindestens einen plattenförmigen Gegenstand (2, 3, 4).

10. Verfahren zum Vereinzeln und Bewegen von plattenförmigen Gegenständen (2, 3, 4), insbesondere von Schleifscheiben (1) von einem Stapel (5), wobei eine Vorrichtung (13) einen vertikal bewegbaren Greifer (7, 25) mit einer Klemmvorrichtung (32) mit radial bewegbaren Klemmbacken (23) aufweist, wobei das Verfahren durch folgende Verfahrensschritte gekennzeichnet ist:
10.1 Einfahren des Greifers (7, 25) in mindestens eine Ausnehmung (6) eines plattenförmigen Gegenstandes (2, 3, 4), wobei die Klemmbacken (23) zusammengefahren sind;
10.2 Ausfahren der Klemmbacken (23), welche sich an den Rand der Ausnehmung (6) des plattenförmigen Gegenstandes (2, 3, 4) anlegen.
10.3 Abheben der Vorrichtung (13) von dem Stapel (5) zusammen mit dem mindestens einen plattenförmigen Gegenstand (2, 3, 4).
